# EUROPEAN PATENT SPECIFICATION

(11) **EP 0 457 461 B1**
(45) Date of publication and mention of the grant of the patent: **20.04.1994**
(21) Application number: 91303946.7
(22) Date of filing: 01.05.1991
(51) Int. Cl.: B60T 7/08, B60T 7/10

(54) **Vehicle hand brake assembly**
Fahrzeughandbremseinheit
Ensemble de frein à main pour véhicule

(30) Priority: 15.05.1990 GB 9011136
(43) Date of publication of application: 21.11.1991
(73) Proprietor: Metallifacture Limited, Redhill Nottingham NG5 8PY (GB)
(72) Inventor: Parvinmehr, Hossein, Duffield, Derby DE3 4DT (GB)
(74) Representative: MacGregor, Gordon

(56) References cited:
- EP-A- 0 344 369
- AU-B- 443 613
- FR-A- 1 598 549
- US-A- 4 212 211
- US-A- 4 881 424

## Description

This invention relates to a vehicle hand-brake assembly.

Hand-brake assemblies commonly comprise a hand-actuable lever pivotally mounted on a support and having a brake-cable attached to the lever at a position spaced from the lever pivot, so that angular movement of the lever varies the tension in the cable. The support mounts an arcuate rack and the lever pivotally carries a pawl, spring-urged to engage the rack, for holding the lever in a selected angular position. A button in the lever is connected to the pawl and can be actuated to release the pawl, to permit movement of the lever from an operating position to a parked position. The position of the lever relative to the support determines the tension in the cable and tension is released, when the lever is in the parked position.

GB-1223088 discloses an arrangement in which the lever is effectively split between a brake lever connected to the brake-cable and a separately pivoted hand-actuable lever, which abuts the brake lever to move this in the brake-applying direction. The hand-actuable lever can be pivotally returned to a parked position while the brake lever is retained in the brake-applying position by the pawl.

The connecting rod is separable from the pawl as the hand-actuable lever is moved to the parked position, with the brakes applied. A spring is positioned to hold the hand-actuable lever in engagement with the pawl.

US-A-4212211 also discloses an arrangement in which there are separate brake and actuating levers. The actuating lever is of channel form and levers have a common pivot axis. Projections are provided on the brake lever to engage with end faces of the channel sides of the actuating lever for moving the brake lever in the brake cable tensioning direction. The abutment surface areas are small and easily damageable and close tolerances are required in manufacture. Slight bending of the actuating lever, bringing the channel sides towards each other will make the arrangement unworkable, so that reinforcement would be necessary to prevent such movement.

The present invention provides an arrangement which is simpler in construction, more robust and less likely to fail with wear.

The pre-characterising part of Claim 1 is based on US-A-4212211 and the distinguishing features of the invention are as set out in the characterising part of Claim 1.

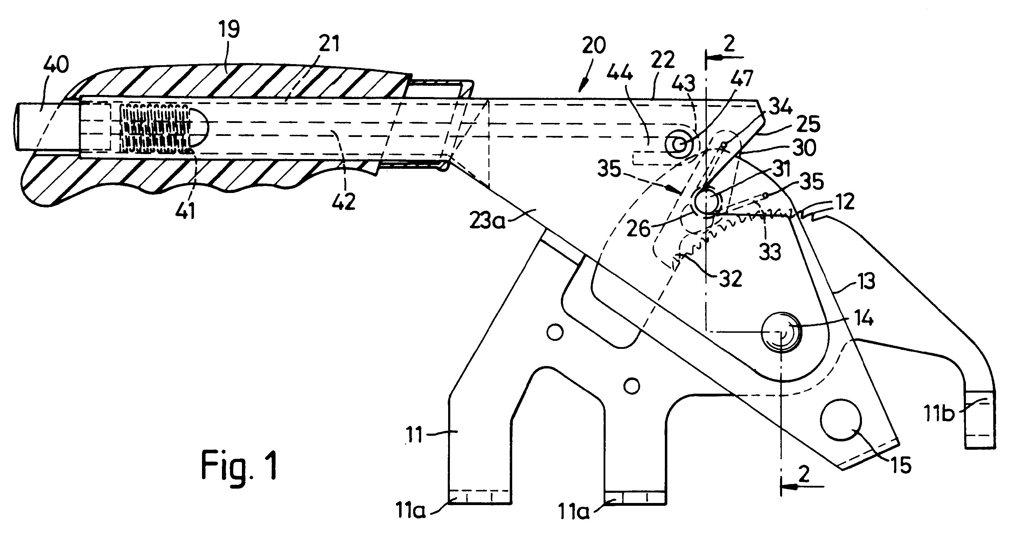

Reference is now made to the accompanying drawing, wherein:-
Figure 1 is a diagrammatic side elevation of a hand-brake assembly according to the invention;

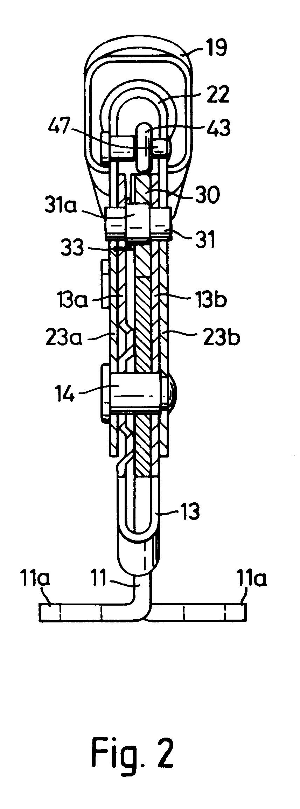

Figure 2 is a sectional view of the line 2--2 of Figure 1;
Figure 3 is a side view of a brake lever of the assembly, and
Figure 4 is an opposite side view of the brake lever.

The assembly shown comprises a support 11 in the form of a metal plate, having an arcuate row of ratchet teeth 12. The support has feet 11a and an end attachment member 11b by which the support is bolted to a vehicle floor. A brake lever 13 is pivoted to the support by a pin 14, concentric with the ratchet teeth 12. The brake lever is channel-shaped, comprising a pair of joined metal plates 13a,13b, of roughly triangular shape. A connector 15, for connection to a brake cable, is provided at one end of the lever.

Hand-actuable means comprises an actuating lever 20 of conventional form. The actuating lever comprises a hollow cylindrical part 21 at one end merging into a U-shaped part 22, defining a pair of parallel lugs 23a,23b, at the opposite end. The lugs 23 are pivoted to the pin 14 and the lever is accommodated within the U-shaped part 22.

A pawl 30 is pivoted to the brake lever 13 by a cross-pin 31 and has a tooth 32 biased into engagement with the ratchet teeth 12 by a torsion spring 33. The torsion spring is wrapped around the cross-pin 31 and has its ends fixed to studs 34,35 on the pawl 30 and the brake lever 13 respectively.

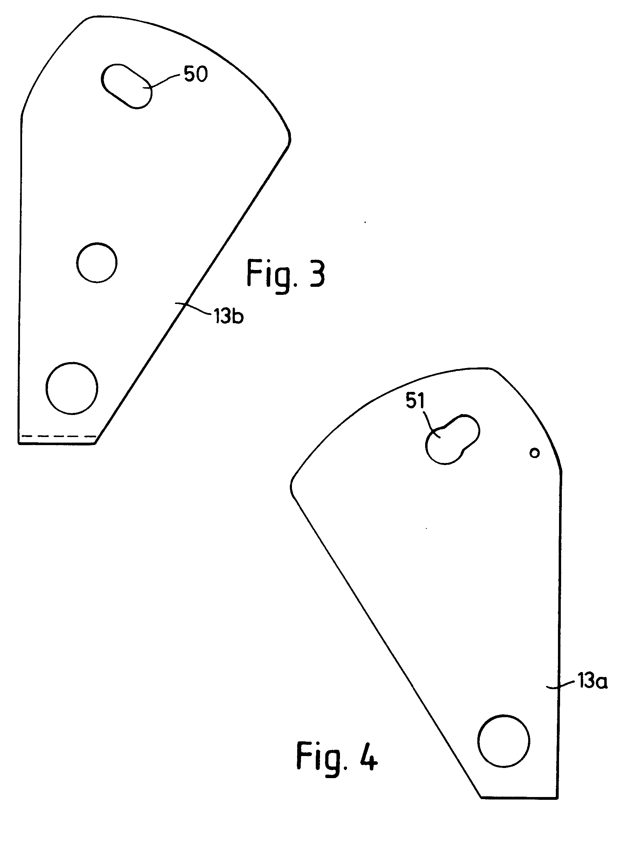

The cross-pin 31 is fixed to the brake lever 13 and extends through slots therein to project to both opposite sides of the lever. The slots are shown in Figures 3 and 4. The slot in one plate 13b is a simple elongate slot 50, whereas that in the other plate 13a is a keyhole slot 51. The spring 33 holds the pin at one end of each slot. The keyhole arrangement permits a larger diameter central portion 31a of the pin to pass through the keyhole slot 51, but the pin is then slid along the slot to prevent removal of the pin. The pawl 30 is pivoted on the central part of the pin.

The lugs 23 have open-ended slots 25 whose closed ends 26 are shaped complementary to, and are engageable with the cross-pin 31 at opposite sides of the brake lever 13. Each slot flares away from its closed end 26.

The hollow cylindrical part 21 of the actuating lever 20 carries a shaped hand-grip 19.

The arrangement is such that, as the actuating lever 20 is pivotally moved from its parked position shown in the Figure, the closed ends 26, which define abutment surfaces, are in abutment with the cross-pin 31, so that the brake lever 13 is caused to rotate to tension the brake cable. The actuating lever is then returned to the parked position, rotating about its pivot pin 14, while the pawl 30 holds the brake lever 13 in its new position with the brake applied, so that the cross-pin 31 disengages from the closed ends 26 of the slots 25. Throughout this movement, the brake lever 13 remains accommodated in the U-shaped part 22 of the actuating lever.

A pawl release mechanism is provided comprising a button 40 engaged in the free end of the hollow cylindrical portion 21 and biased to a projecting position by a spring 41. A connecting rod 42 extends from the button to the pawl, so that depression of the button causes release of the pawl.

To permit parking of the actuating lever in the brake-applied state, the connecting rod 42 is not fixed to the pawl, but has its end 43 adjacent the pawl rolled to define an open-ended slot 44. This slot receives a guide pin 47, fixed between the lugs 23 of the actuating lever, whereby the connecting rod 42 is constrained to move linearly as the button 40 is depressed. The end 43 of the connecting rod is radiussed and is engageable with, but separable from, a flat cam face 35' on the pawl 30. The connecting rod end 43 separates from the cam face 35' on release of the button, permitting parking of the actuating lever, while the brake lever 13 is held by the pawl 30. The cam face 35' cannot be engaged by the rod end 43, to release the brake lever, with the actuating lever in the parked position.

The arrangement provides a very simple construction for a brake assembly of this type, in which the actuating lever can be parked with the brakes applied. The arrangement uses a small number of parts and is a robust and reliable construction.

## Claims

1. A vehicle hand-brake assembly comprising a support (11), a brake lever (13) pivoted on the support and having means (15) for connection to a brake cable, an actuating lever (20) for moving the brake lever (13) to tension the cable, ratchet teeth (12) on the support (11) and a pawl (30) biased into engagement with the ratchet teeth to prevent return of the brake lever (13), the actuating lever (20) being angularly movable relative to the brake lever (13) so as to be returnable to a parked position while the brake lever (13) is held by the pawl (30), and a release device (40,42) for releasing the pawl (30) from the ratchet teeth (12) to permit return of the brake lever (13), characterised in that the brake lever (13) is accommodated within the actuating lever (20) which has a slot (25) defining an abutment surface (26) within the actuating lever, and in that a cross-pin (31) is mounted on the brake lever (13) and engageable by the abutment surface (26) to permit movement of the brake lever (13) by the actuating lever (20) in the brake cable tensioning direction.

2. A vehicle hand-brake assembly according to Claim 1, wherein the actuating lever (20) comprises a pair of lugs (23) and the brake lever (13) comprises a plate accommodated therebetween and carrying said cross pin (31), each of said lugs having a slot (25) receiving the cross pin (31).

3. A vehicle hand-brake assembly according to Claim 1 or 2, wherein the pawl (30) is pivotally mounted by said cross-pin (31) and the actuating lever (20) and brake lever (13) are movable about a common axis.

4. A vehicle hand-brake assembly according to Claim 3, wherein the cross-pin (31) is rotatably received in a pair of slots (50,51), in respective parallel plates (13a,13b) of the brake lever (13), the cross-pin having a central portion (31a) of enlarged diameter on which the pawl (30) is pivotally mounted, and one of said slots (51) being a keyhole slot to facilitate passage of the central portion (31a) through the slot.

5. A vehicle hand-brake assembly according to any preceding claim wherein the release device comprises a button (40) in the actuating lever (20) and a connecting rod (42) between the button and the pawl (30), the connecting rod (42) being movable with the actuating lever (20) away from the pawl (30), and the connecting rod (42) having a slot (44) receiving a guide member (47) on the actuating lever (20) for guiding the rod (42) to engage the pawl (30) on depression of the button (40), with the abutment surface (26) in contact with the cross-pin (31).

6. A vehicle hand-brake assembly according to Claim 5, wherein the slot (44) in the connecting rod (42) is open-ended and is defined by a bent end of the rod.

7. A vehicle hand-brake assembly according to Claim 5 or 6, wherein the guide member is a pin (47).

## Patentansprüche

1. Fahrzeughandbremseinheit mit einem Trägerteil (11), mit einem Bremshebel (13), der an dem Trägerteil Schwenkbar gelagert ist und einen Anschluß (15) für ein Bremsseil (16) aufweist, mit einem Handhebel (20) zur Betätigung des Bremshebels (13) für das Anziehen des Bremsseils (16), mit Sperrzähnen (12) auf dem Trägerteil (11) und einer Klinke (30), die federnd mit den Sperrzähnen in Kontakt kommt, um die Rückverschwenkung des Bremshebels zu verhindern, wobei der Handhebel (20) relativ zu dem Bremshebel (13) in eine Ruhestellung zurückverschwenkbar ist, während der Bremshebel (13) durch die Klinke (30) festgehalten ist, und mit einer Löseeinrichtung (40, 42) zum Ausheben der Klinke (30) aus den Sperrzähnen (12) für die Rückverschwenkung des Bremshebels (13), dadurch gekennzeichnet, daß der Bremshebel (13) in dem Handhebel (20) angepasst vorgesehen ist, der eine randoffene Ausnehmung (25) aufweist, die eine Gegenfläche (26) in dem Handhebel bildet, und daß ein Zapfen (31) auf dem Bremshebel (13) angeordnet ist, der mit der Gegenfläche (26) in Kontakt kommt, um das Verschwenken des Bremshebels (13) über den Handhebel (20) in Anziehrichtung des Bremsseils zu ermöglichen.

2. Fahrzeughandbremseinheit nach Anspruch 1, dadurch gekennzeichnet, daß der Handhebel (20) ein Paar Fortsätze (23) aufweist und der Bremshebel (13) eine dazwischen angepasste Platte umfasst und den Zapfen (31) trägt, wobei jeder Fortsatz eine randoffene Ausnehmung (25) zur Aufnahme des Zapfens (31) aufweist.

3. Fahrzeughandbremseinheit nach Anspruch 1 oder 2, dadurch gekennzeichnet, daß die Klinke (30) schwenkbar auf dem Zapfen (31) gelagert ist und daß der Handhebel (20) und der Bremshebel (13) um eine gemeinsame Achse bewegbar sind.

4. Fahrzeughandbremseinheit nach Anspruch 3, dadurch gekennzeichnet, daß der Zapfen (31) drehbar in einem Paar von Schlitzen (50, 51) in entsprechenden parallelen Platten (13a, 13b) des Bremshebels (13) aufgenommen ist, daß der Zapfen einen Mittelteil (31a) mit vergrößertem Durchmesser ausweist, auf dem die Klinke (30) schwenkbar angeordnert ist, und daß einer der Schlitze als Schlüssellochschlitz (51) ausgebildet ist, um das Einsetzen des Mittelteils (31a) durch den Schlitz zu erleichtern.

5. Fahrzeughandbremseinheit nach einem der vorangehenden Ansprüche, dadurch gekennzeichnet, daß die Löseeinrichtung einen Knopf (40) in dem Handhebel (20) und eine Verbindungsstange (42) zwischen dem Knopf und der Klinke (30) aufweist, daß die Verbindungsstange (42) einen Schlitz (44) zur Aufnahme eines Führungsbolzens (47) an dem Handhebel (20) zur Führung der Verbindungsstange (42) besitzt, die beim Drücken des Knopfes (40) mit der Klinke (30) in Kontakt kommt, wenn die Gegenfläche (26) in Kontakt mit dem Zapfen (31) ist.

6. Fahrzeughandbremseinheit nach Anspruch 5, dadurch gekennzeichnet, daß der Schlitz (44) in der Verbindungsstange (42) randoffen ausgebildet ist und von einer Umbiegung des Endes der Verbindungsstange gebildet ist.

7. Fahrzeughandbremseinheit nach Anspruch 5 oder 6, dadurch gekennzeichnet, daß der Führungsbolzen (47) ein Stift ist.

## Revendications

1. Ensemble de frein à main pour véhicule comprenant un support (11), un levier (13) de frein articulé sur le support et ayant un moyen (15) de liaison avec un câble de frein, un levier d'actionnement (20) pour déplacer le levier (13) de frein afin de tendre le câble, des dents d'encliquetage (12) présentes sur le support (11) et un cliquet (30) poussé au contact des dents d'encliquetage afin d'empêcher le retour du levier (13) de frein, le levier d'actionnement (20) pouvant être déplacé angulairement par rapport au levier (13) de frein de façon à pouvoir être ramené en position d'immobilisation tandis que le levier (13) de frein est retenu par le cliquet (30), et un dispositif de libération (40,42) pour dégager le cliquet (30) des dents d'encliquetage (12) afin de permettre le retour du levier (13) de frein, caractérisé en ce que le levier (13) de frein est logé à l'intérieur du levier d'actionnement (20) qui comporte une fente (25) définissant une surface de butée (26) dans le levier d'actionnement, et en ce qu'un croisillon (31) est monté sur le levier (13) de frein et peut être sollicité par la surface de butée (26) pour permettre le déplacement du levier (13) de frein par le levier d'actionnement (20) dans le sens de la tension du câble de frein.

2. Ensemble de frein à main pour véhicule selon la revendication 1, dans lequel le levier d'actionnement (20) comporte une paire de pattes (23) et le levier (13) de frein comporte une plaque intercalée entre celles-ci et portant ledit croisillon (31), chacune desdites pattes ayant une fente (25) recevant le croisillon (31).

3. Ensemble de frein à main pour véhicule selon la revendication 1 ou 2, dans lequel le cliquet (30) est porté d'une manière articulée par ledit croisillon (31) et le levier d'actionnement (20) et le levier (13) de frein sont mobiles autour d'un axe commun.

4. Ensemble de frein à main pour véhicule selon la revendication 3, dans lequel le croisillon (31) est logé d'une manière rotative dans une paire de fentes (50,51), dans des plaques parallèles respectives (13a,13b) du levier (13) de frein, le croisillon ayant une partie centrale (13a) d'un diamètre agrandi sur laquelle le cliquet (30) est monté d'une manière articulée, et une desdites fentes (51) étant une fente en trou de serrure pour faciliter le passage de la partie centrale (31a) par la fente.

5. Ensemble de frein à main pour véhicule selon l'une quelconque des revendications précédentes, dans lequel le dispositif de libération comporte un bouton (40) situé dans le levier d'actionnement (20) et une tringle de liaison (42) entre le bouton et le cliquet (30), la tringle de liaison (42) pouvant être éloignée du cliquet (30) conjointement avec le levier d'actionnement (20), et la tringle de liaison (42) ayant une fente (44)recevant un élément de guidage (47) situé sur le levier d'actionnement (20) pour guider la tringle (42) afin d'engager le cliquet (30), au moment de l'enfoncement du bouton (40), avec la surface de butée (26) au contact du croisillon (31).

6. Ensemble de frein à main pour véhicule selon la revendication 5, dans lequel la fente (44) de la tringle de liaison (42) a une extrémité ouverte et est définie par une extrémité cintrée de la tringle.

7. Ensemble de frein à main pour véhicule selon la revendication 5 ou 6, dans lequel l'élément de guidage est un doigt (47).
